(19) Europäisches Patentamt / European Patent Office / Office européen des brevets

(11) **EP 2 826 017 B1**

(12) **FASCICULE DE BREVET EUROPEEN**

(45) Date de publication et mention
de la délivrance du brevet:
**18.07.2018 Bulletin 2018/29**

(21) Numéro de dépôt: **13708861.3**

(22) Date de dépôt: **13.03.2013**

(51) Int Cl.:
***G06T 7/80*** *(2017.01)*

(86) Numéro de dépôt international:
**PCT/EP2013/055185**

(87) Numéro de publication internationale:
**WO 2013/135788 (19.09.2013 Gazette 2013/38)**

(54) **PROCÉDÉ DE DÉTERMINATION DES PARAMÈTRES GÉOMÉTRIQUES INDIQUANT LE MOUVEMENT D'UNE CAMÉRA**

VERFAHREN ZUR BESTIMMUNG GEOMETRISCHER PARAMETER ZUR ANZEIGE DER BEWEGUNG EINER KAMERA

METHOD FOR DETERMINING THE GEOMETRIC PARAMETERS INDICATING THE MOVEMENT OF A CAMERA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.03.2012 BE 201200168**

(43) Date de publication de la demande:
**21.01.2015 Bulletin 2015/04**

(73) Titulaire: **Deltacast S.A.**
**4430 Ans (BE)**

(72) Inventeurs:
• **WERY, Bruno**
**B-4870 Trooz (BE)**
• **ROBA, Olivier**
**B-4520 Wanze (BE)**
• **MAGDELYNS, Sébastien**
**B-1030 Bruxelles (BE)**

(74) Mandataire: **Gevers Patents**
**Intellectual Property House**
**Holidaystraat 5**
**1831 Diegem (BE)**

(56) Documents cités:
• **TAKAHIRO MOCHIZUKI ET AL: "Fast identification of player position in soccer broadcast video by block-based camera view angle search", IMAGE AND SIGNAL PROCESSING AND ANALYSIS, 2009. ISPA 2009. PROCEEDINGS OF 6TH INTERNATIONAL SYMPOSIUM ON, IEEE, PISCATAWAY, NJ, USA, 16 septembre 2009 (2009-09-16), pages 408-413, XP031552050, ISBN: 978-953-184-135-1**
• **MATTHEW BROWN ET AL: "Automatic Panoramic Image Stitching using Invariant Features", INTERNATIONAL JOURNAL OF COMPUTER VISION, vol. 74, no. 1, 26 avril 2007 (2007-04-26), pages 59-73, XP055013133, ISSN: 0920-5691, DOI: 10.1007/s11263-006-0002-3**
• **HYUNWOON KIM ET AL: "Robust Image Mosaicing of Soccer Videos using Self-Calibration and Line Tracking", PATTERN ANALYSIS & APPLICATIONS, vol. 4, no. 1, 27 mars 2001 (2001-03-27), pages 9-19, XP055042530, ISSN: 1433-7541, DOI: 10.1007/s100440170020**

EP 2 826 017 B1

**Description**

La présente invention concerne un procédé de détermination des paramètres géométriques indiquant le mouvement d'une caméra dont le centre optique reste immobile ou se déplace selon une trajectoire connue, laquelle caméra enregistre un ensemble comprenant P images vidéo d'une action qui se déroule sur au moins un segment d'une surface, ledit procédé étant destiné à permettre l'incrustation d'éléments graphiques dans les images vidéo.

Un tel procédé est par exemple connu de l'article de Hyunwoo Kim et Ki Sang Hong intitulé «Robust image mosaicing of soccer videos using sel-calibration and line tracking» publié dans Pattern Analysis & Applications volume 4, no 1, 27/03/2001 pages 9-19. Le procédé est appliqué dans le cadre de la retransmission télévisée d'un événement sportif, dans laquelle on fait appel aux techniques dites de «réalité augmentée». La réalité augmentée consiste à modifier l'image en y insérant des graphismes particuliers en trois dimensions, de façon à les faire apparaître en cohérence avec le contenu de l'image, en particulier en s'assurant que ces graphismes présentent une perspective équivalente à celle de la scène et sont modifiés en fonction des mouvements de la caméra, ainsi que des changements de zoom. Ces graphismes apparaissent alors comme faisant partie de la scène filmée. Ces techniques permettent également d'effectuer des mesures à partir de l'image. Par exemple, il est possible d'effectuer des mesures de distances et de positions. Pour pouvoir réaliser ces insertions ou ces mesures, il est nécessaire de connaître non seulement les caractéristiques géométriques de la scène, mais aussi les paramètres géométriques de la caméra.

Un autre procédé est par exemple connu de l'article MATTHEW BROWN ET AL: "Automatic Panoramic Image Stitching using Invariant Features", INTERNATIONAL JOURNAL OF COMPUTER VISION, vol. 74, no. 1, 26 avril 2007 (2007-04-26), pages 59-73. Le procédé est appliqué dans la création de panoramas à partir d'un jeu d'images par l'utilisation de caractéristiques invariantes aux images du jeu d'images utilisé.

Un autre procédé est par exemple connu de l'article TAKAHIRO MOCHIZUKI et al. "Fast identification of player position in soccer broadcast video by block-based camera view angle search", IMAGE AND SIGNAL PROCESSING AND ANALYSIS, 2009. ISPA 2009. PROCEESDINGS OF 6TH INTERNATIONAL SYMPOSIUM ON, IEEE, PISCATAWAY, NJ, USA, 16 septembre 2009 (2009-09-16), pages 408-413. Le procédé est appliqué à l'identification de la position des joueurs sur un terrain de football. Le procédé permet l'identification de blocs associés aux joueurs et aux lignes de jeu. Le procédé utilise une technique de reconnaissance des éléments distinctifs des images d'une vidéo.

Dans le cadre d'une retransmission télévisée, il est nécessaire de connaître ces paramètres pour chaque image du flux vidéo. Sachant que la position de la caméra est fixe, une méthode traditionnelle pour déterminer les paramètres géométriques de la caméra en mouvement est d'équiper la caméra avec des capteurs mesurant les angles et le facteur de zoom.

Les caractéristiques de décentrage et de distorsion de lentille sont généralement mesurées comme une fonction du facteur de zoom, et éventuellement du réglage de mise au point. La caméra est alors également équipée d'un capteur relatif à ce réglage, même s'il est généralement beaucoup moins significatif.

Toutefois, même si le montage de tels capteurs permet de mesurer le mouvement de la caméra, ceci est toutefois une opération complexe qui nécessite un calibrage et une infrastructure. De plus, il n'est pas toujours possible de pouvoir agir sur le capteur ou d'y avoir accès, en particulier lorsque l'image est reçue d'une caméra qui ne se trouve pas à l'endroit où l'image est traitée.

Un désavantage du procédé connu de l'article de Hyunwoo Kim et Ki Sang Hong est qu'il fait usage de lignes qui sont présentes sur la surface. Il est en effet pas toujours possible de bien distinguer dans l'image ces lignes, ce qui affecte alors la qualité des paramètres déterminés. De plus, il est également possible que de telles lignes n'existent pas dans l'image.

Un autre désavantage du procédé connu de l'article de Matthew Brown et al. est que la sélection de caractéristiques invariantes aux images du jeu d'images sélectionné apparaît relativement compliquée à mettre en oeuvre dans le cas d'une texture dite aléatoire telle que celle présentée par du gazon.

Un autre désavantage du procédé connu de l'article de TAKAHIRO MOCHIZUKI et al. est que la détermination de la position des blocs d'images correspondant aux joueurs se fait relativement aux lignes de jeu. Ainsi la présence de lignes de jeu est nécessaire pour déterminer la position des blocs d'image correspondant aux joueurs.

L'invention a pour but de réaliser un procédé où les paramètres géométriques indiquant le mouvement d'une caméra peuvent être obtenus à partir des images mêmes enregistrées par la caméra sans utiliser des lignes présentes dans l'image.

A cette fin un procédé suivant l'invention est caractérisé en ce que le procédé comporte le stockage dans une mémoire des paramètres géométriques initiaux déterminés pour une image initiale (p=1; (1≤p≤P)) faisant partie de l'ensemble de P images enregistrées par la caméra, et suivant lequel chaque image p est chaque fois au moins partiellement segmentée en un nombre N de zones, chaque zone n (1≤n≤N) représentant une partie distincte dudit segment, et en ce que pour chacune des images dudit ensemble on sélectionne, soit dans une image précédente p-i (p-i≥1; i<p) soit dans l'image p considérée, un sous-ensemble de M (M≤N) desdites zones dont chacune des M zones possède un élément d'image qui reprend dans la surface une texture de nature essentiellement aléatoire et qui reste essentiellement inchangée pendant l'enregistrement de l'ensemble d'images, et en ce que l'on forme chaque fois un couple entre l'image p-i et l'image p pour réaliser ensuite une série de S ($1 \leq s \leq S$) projections géométriques desdites M zones sélectionnées entre les images dudit couple et déterminer pour chaque projection (s) un taux de coïncidence entre les zones projetées, et en ce que l'on recherche parmi les S projections géométriques celle qui fournit le taux de coïncidence le plus élevé entre les zones des images p-i et p, et en ce que l'on détermine les paramètres géométriques de l'image p considérée à partir des paramètres géométriques de l'image p-i et de la projection géométrique utilisée qui a mené au taux de coïncidence le plus élevé, ladite incrustation étant réalisée selon la perspective de la camera dans le flux de l'ensemble d'images. Dans le procédé suivant l'invention on part des paramètres géométriques déterminés pour une image initiale et qui sont stockés en mémoire. Pour chaque image subséquente de l'ensemble, l'image subséquente est segmentée en N zones dont chacune de ces zones représente une partie distincte de l'image. Parmi ces N zones M sont choisies tant dans l'image p considérée, que dans une image précédente p-i pour réaliser une série de projections géométriques entre ces M zones sélectionnées. Cette sélection est de préférence réalisée en choisissant ces M zones où une correspondance entre l'image p et l'image p-i est présente. Ces projections permettent alors de déterminer pour chaque projection un taux de coïncidence entre les zones projetées. En effet, comme la caméra peut avoir subi un changement entre l'image p et p-i, comme par exemple un zoom ou une rotation, les différentes projections permettront de détecter le mouvement de la caméra, puisque celle qui aura le taux de coïncidence le plus élevé correspondra le mieux au mouvement que la caméra aura exécuté. On pourra ainsi, à partir des paramètres géométriques déterminés pour l'image p-i et à partir de la projection indiquant le mieux le mouvement de la caméra, déterminer les paramètres géométriques de la caméra pour l'image p considérée.

Une première forme de réalisation préférentielle d'un procédé suivant l'invention est caractérisée en ce que pour déterminer le taux de coïncidence de chacune des projections géométriques on recherche un maximum de corrélation entre les zones projetées d'une même projection. En recherchant le maximum de corrélation on permet une sélection fiable parmi la série de S projections de celle qui indique le mieux le mouvement de la caméra entre le couple d'images p et p-i.

Une deuxième forme de réalisation préférentielle d'un procédé suivant l'invention est caractérisée en ce que chaque image p de l'ensemble de P images est enregistrée en couleur par la caméra et transformée en image monochrome avant de déterminer le taux de coïncidence. L'usage d'images en couleur facilite le choix des M zones à sélectionner, car elles permettent d'utiliser le facteur couleur dans la sélection des M zones. On fait ainsi ressortir la structure de la surface tout en éliminant des éléments tels que des ombres ou d'autres variantes d'éclairage, qui peuvent perturber le bon fonctionnement du procédé.

Une troisième forme de réalisation préférentielle d'un procédé suivant l'invention est caractérisée en ce que le procédé est appliqué à des images vidéo concernant un jeu qui est joué sur ladite surface, en particulier un jeu de football, rugby ou de tennis, ladite sélection des zones étant réalisée par une détection du segment de jeu de la surface qui constitue la surface de jeu, suivie de ladite répartition en zones dans ledit segment de jeu. Dans les surfaces où des jeux tels que le football, rugby ou le tennis sont joués, il y a une surface ayant une couleur relativement uniforme, comme le gazon vert pour le football ou la brique pillée rouge pour le tennis, même si cette couleur présente néanmoins des variantes aléatoires. Le fait que ce composant de couleur reste inchangé durant tout l'ensemble vidéo permet d'établir des zones de coïncidences entre les différentes images.

Une quatrième forme de réalisation préférentielle d'un procédé suivant l'invention est caractérisée en ce que ladite détection du segment de jeu est réalisée par une détection de couleur, ou est approximée par une détection du segment de jeu dans une autre image de l'ensemble des images. En particulier dans le sport il y a des couleurs dominantes. Ainsi par exemple en football le vert de la surface est une couleur dominante. Détecter sur base d'une couleur dans l'image permet alors de détecter sur base d'un élément dominant dans l'image, ce qui augmente la fiabilité du procédé suivant l'invention.

Une cinquième forme de réalisation préférentielle d'un procédé suivant l'invention est caractérisée en ce que l'on détermine un seuil de corrélation par zone et que l'on rejette ces zones pour lesquelles le seuil de corrélation n'est pas atteint. On réduit ainsi le temps de traitement en rejetant des zones qui ne comportent pas d'information relevante pour déterminer les paramètres géométriques. De plus on élimine les zones qui ne seraient pas en concordance suite à un évènement temporel comme par exemple la présence d'un joueur.

Une sixième forme de réalisation préférentielle d'un procédé suivant l'invention est caractérisée en ce que ladite série de s projections est déterminée par une prédiction de mouvement continu entre l'image p et l'image p-i. Lorsque la caméra subit un mouvement, ce mouvement est en général un mouvement continu. Pour cette raison il y a un avantage de détecter et de sélectionner ce mouvement continu, ce qui permet alors une détection rapide et fiable.

Une septième forme de réalisation préférentielle d'un procédé suivant l'invention est caractérisée en ce que pour chaque image $p \neq 1$ les zones ne faisant pas partie de la surface de jeu sont éliminées. Ceci permet de rejeter dès le départ des zones qui sont sans intérêt.

Une huitième forme de réalisation préférentielle d'un procédé suivant l'invention est caractérisé en ce qu'entre l'image p et une image p-j où p-j$\geq$1 et $3 \leq j < p$ un autre couple est formé pour réaliser ensuite une série de S' ($1 \leq s' \leq S'$) projections géométriques desdites M zones sélectionnées entre les images dudit autre couple et déterminer pour chaque projection s' un autre taux de coïncidence entre les zones projetées, et en ce que l'on recherche parmi les S' projections géométriques celle qui fournit un autre taux de coïncidence le plus élevé entre les zones des images p-j et p, et en ce que l'on détermine les paramètres géométriques de l'image p considérée à partir des paramètres géométriques de l'image p-i et p-j de la projection géométrique utilisée qui ont mené à l'autre taux de coïncidence le plus élevé. L'écart entre des images plus éloignées dans le temps entre-elles est généralement bien plus grand que l'écart présent entre deux images qui se suivent. Traiter avec des images plus éloignées dans le temps permet alors de corriger certaines déviations.

L'invention sera maintenant décrite en détails à l'aide des dessins qui illustrent des formes de réalisation préférées du procédé suivant l'invention. Dans les dessins :

la figure 1 illustre une surface d'un terrain de sport, en particulier de football avec une caméra;
la figure 2 illustre les angles autour desquels une caméra peut être bougée;
la figure 3 illustre la sélection des zones;
la figure 4 illustre la re-projection conique d'une image à partir du même centre optique; et
la figure 5 illustre les différentes étapes du procédé suivant l'invention.

Dans les dessins un même signe de référence a été attribué à un même élément ou à un élément analogue.

La technique appelée de "réalité augmentée" est entre autres utilisée dans le cadre de la retransmission télévisée d'un événement sportif, comme du football, rugby ou du tennis. La réalité augmentée consiste à modifier l'image enregistrée par une caméra en y insérant des graphismes, en particulier en trois dimensions, de façon à les faire apparaître en cohérence avec le contenu de l'image, en particulier en s'assurant que ces graphismes présentent une perspective équivalente à celle de la scène et sont modifiés en fonction du mouvement de la caméra ainsi que des changements de zoom. L'insertion ou incrustation de ces éléments graphiques dans les images vidéo est réalisée selon la perspective de la caméra dans le flux de l'ensemble d'images. Ces graphismes apparaissent alors comme faisant partie de la scène filmée. Ces techniques permettent également d'effectuer des mesures à partir de l'image enregistrée par la caméra, comme par exemple des mesures de distances et/ou de positions.

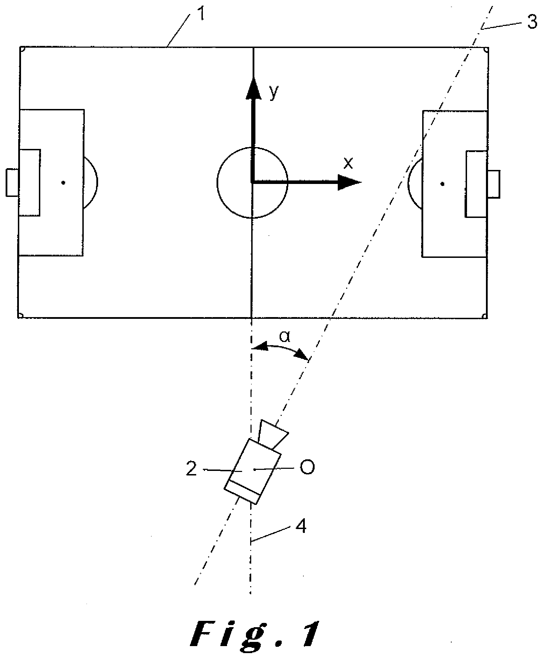

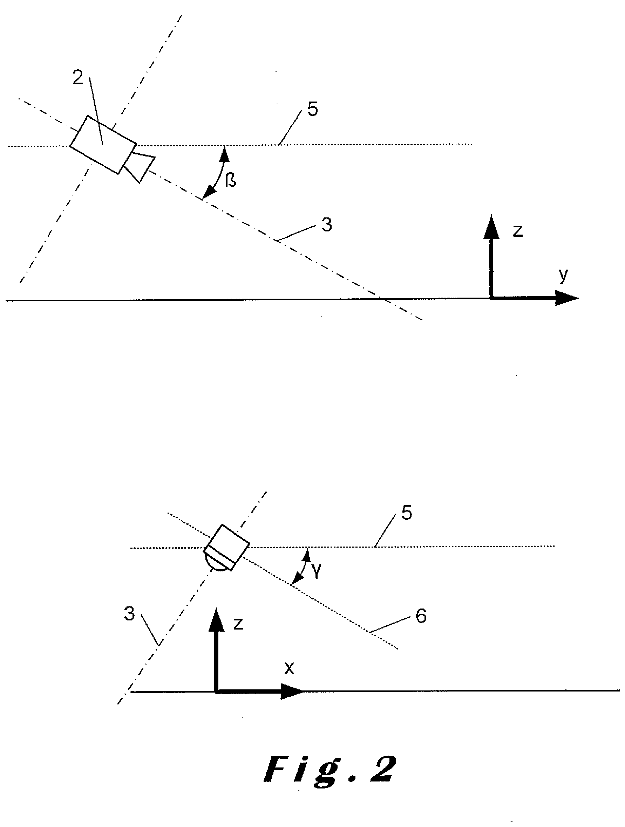

La figure 1 illustre une surface d'un terrain de football 1 le long duquel une caméra 2 est installée pour capter des images de la surface et du jeu. La caméra 2 possède un axe optique 3. Elle peut également être pivotée autour d'un angle d'azimut $\alpha$ qui s'étend dans le plan x, y de la surface et forme l'angle entre un axe central 4 lié à la surface et l'axe optique 3 de la caméra. Considéré dans l'espace tridimensionnel x, y, z illustré dans la figure 2, la caméra peut également se bouger dans le sens de la hauteur suivant un angle d'élévation $\beta$ qui se situe entre l'axe optique 3 et une ligne d'horizon 5. Enfin un angle de roulis $\gamma$ se mesure entre la ligne d'horizon 5 et un axe 6 perpendiculaire à l'axe optique 3 et permet d'exprimer la rotation de la caméra dans le plan z, x.

L'insertion de graphismes dans l'image captée ou la mesure de distances et/ou de positions dans cette image nécessite de connaître non seulement les caractéristiques géométriques de la scène, mais également les caractéristiques géométriques de la caméra. Ces caractéristiques sont (voir figure 1) :

- la position 0 dans l'espace du centre optique de la caméra exprimée en coordonnées $(x_0, y_0, z_0)$ par rapport au référentiel (x, y, z) de la surface;
- la position angulaire, laquelle peut s'exprimer à l'aide de trois paramètres. Traditionnellement, on utilise la rotation autour d'un axe vertical (angle «d'azimut $\alpha$»), l'inclinaison autour d'un axe horizontal perpendiculaire à l'axe optique de la caméra (angle «d'élévation $\beta$») ainsi que l'angle de rotation autour de l'axe optique (angle de «roulis $\gamma$»). Cette définition correspond à la mécanique habituelle des supports de caméra, mais toute autre décomposition équivalente peut être utilisée.
- la distance focale de l'objectif (ou le facteur de zoom), exprimée par rapport à la taille du capteur ou de son intervalle d'échantillonnage (taille du pixel);

Dans certains cas, il est utile de tenir compte de paramètres supplémentaires tels que :

- le décentrage de l'axe optique par rapport au centre de l'image;
- les caractéristiques de l'objectif en terme de distorsions, généralement non linéaires.

On néglige généralement les paramètres de mise au point. Néanmoins, ils sont implicitement contenus dans les paramètres précédents à partir du moment où on suppose la mise au point correctement réalisée et la géométrie de la scène connue.

On notera que l'ensemble de ces paramètres, à l'exception des caractéristiques de l'objectif en terme de distorsions non-linéaires peuvent être exprimés sous la forme d'une matrice de projection conique en coordonnées homogènes. Cette matrice, reprise ci-dessous, exprime une relation entre les coordonnées de la scène et les coordonnées dans l'image.

$$(x', y', 0, w') = (x, y, z, 1) \begin{pmatrix} a & b & 0 & c \\ d & e & 0 & f \\ g & h & 0 & i \\ k & l & 0 & m \end{pmatrix}$$

où x, y et z représentent les coordonnées d'un point dans la scène et les rapports (x'/w') et (y',w') représentent les coordonnées de la projection de ce point à partir de la surface dans l'image. Les valeurs a jusqu'à m représentent les valeurs mathématiques de la projection qui peuvent par exemple être calculé à partir des angles de la distance focale et de la position de la caméra. L'usage des coordonnées homogènes est nécessaire pour pouvoir exprimer le fait que cette projection est une projection conique.

Il faut noter que la représentation matricielle de la projection conique n'est pas la seule façon de représenter cette projection. D'autres formes, telles qu'un jeu d'équations trigonométriques peuvent être utilisées. Il est également possible d'incorporer des transformations non-linéaires pour tenir compte des distorsions non-linéaires des lentilles de la caméra. Une combinaison des différentes représentations peut également être utilisée.

Dans le cadre d'une retransmission télévisée, il est nécessaire de connaître ces paramètres pour chaque image du flux vidéo. Sachant que la position de la caméra est fixe, une méthode traditionnelle pour déterminer les autres paramètres est d'équiper la caméra avec des capteurs mesurant les angles et le facteur de zoom.

Les caractéristiques de décentrage et de distorsion de lentille sont de préférence généralement mesurées comme une fonction du facteur de zoom, et éventuellement du réglage de mise au point. La caméra peut d'ailleurs être également équipée d'un capteur relatif à ce réglage, même s'il est généralement beaucoup moins significatif.

Dans le procédé suivant l'invention les paramètres géométriques indiquant le mouvement de la caméra (2) ne sont pas déterminés à partir des capteurs, mais obtenus par traitement de l' ensemble de P images successives ($1 \leq p \leq P$) enregistrées par la caméra. Ceci facilite un traitement en temps réel. Pour démarrer le procédé il faut toutefois déterminer les paramètres géométriques initiaux d'une image initiale (p = 1) de l' ensemble de P images. La détermination de ces paramètres géométriques initiaux de l'image initiale (p = 1) peut être réalisée de diverses façons telles que :

- une mesure physique de la position de la caméra;
- la triangulation sur des points de l'image initiale ou de plusieurs images initiales;
- la mise en concordance de l'image avec des images de référence pour lesquelles ces mesures sont disponibles;
- la mise en correspondance d'un abaque de la surface avec le tracé de celui-ci dans une ou plusieurs images réelles.

Après que les paramètres géométriques initiaux ont été déterminés, les paramètres géométriques des images p ≠ 1 de l' ensemble de p images seront déterminés sur base de ces images et à partir des paramètres géométriques initiaux à l'aide d'un procédé itératif. Ce procédé permet de produire des résultats visuellement satisfaisants, même si les paramètres géométriques initiaux ne sont que peu précis. Au cas où une erreur serait présente dans les paramètres géométriques initiaux, le procédé propagera cette erreur, mais produira néanmoins un résultat bien adapté au flux d'images analysées. Les meilleurs résultats lors de l'application du procédé suivant l'invention, sont obtenus à partir d'images qui retransmettent une action, comme un sport, qui se joue sur une surface de jeu de texture similaire, comme du football, du hockey sur gazon ou du tennis.

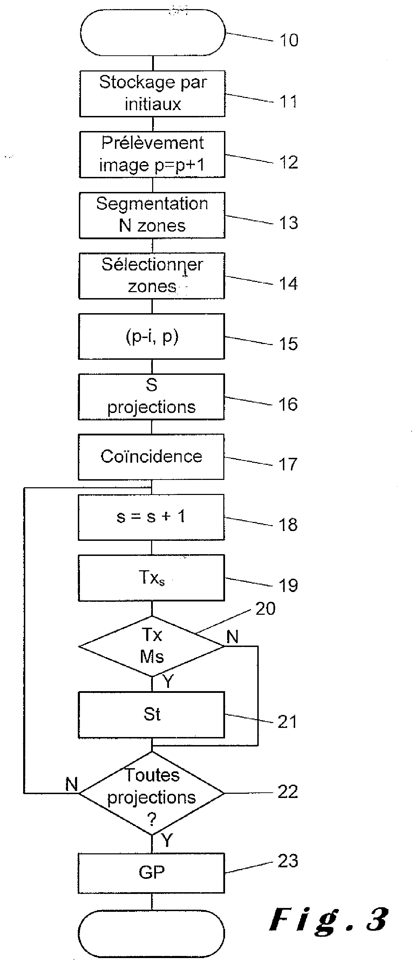

Le procédé suivant l'invention sera maintenant décrit à l'aide de l'organigramme illustré à la figure 3. Le procédé est de préférence exécuté à l'aide d'un ordinateur qui reçoit l' ensemble d'images P sous forme numérique. Le procédé s'applique de préférence sur une image en couleurs. Les images sont de préférence des images non entrelacées (vidéo progressive). Toutefois, le procédé n'est pas limité à des images non entrelacées et peut également s'appliquer à un ensemble d'images entrelacées. Dans le dernier cas soit un seul et même champ de chaque image sera pris en considération, soit un processus de désentrelacement vidéo de l' ensemble sera appliqué de façon à reconstituer un ensemble d'images non entrelacées, soit à la fréquence d'image initiale, soit au double de cette fréquence. Le processus de désentrelacement peut, le cas échéant, être limité à une simple interpolation. Les deux champs d'images ainsi obtenus sont considérés comme deux images successives à la fréquence double de celle du flux initial, ce qui nécessite toutefois une correction des positions des pixels.

Après que les paramètres géométriques initiaux pour l'image initiale (p = 1) de l' ensemble de P images enregistrées par la caméra ont été déterminés (étape 10), ces paramètres géométriques initiaux sont stockés dans une mémoire (11). Ces paramètres géométriques sont par exemple stockés sous la forme d'une structure binaire comprenant un premier champ indiquant l'angle d'azimut a, un deuxième champ indiquant l'angle de roulis γ, un troisième champ indiquant l'angle d'élévation β et d'un quatrième champ indiquant le facteur zoom. Bien entendu d'autres champs peuvent être réservés dans la structure binaire pour indiquer d'autres valeurs.

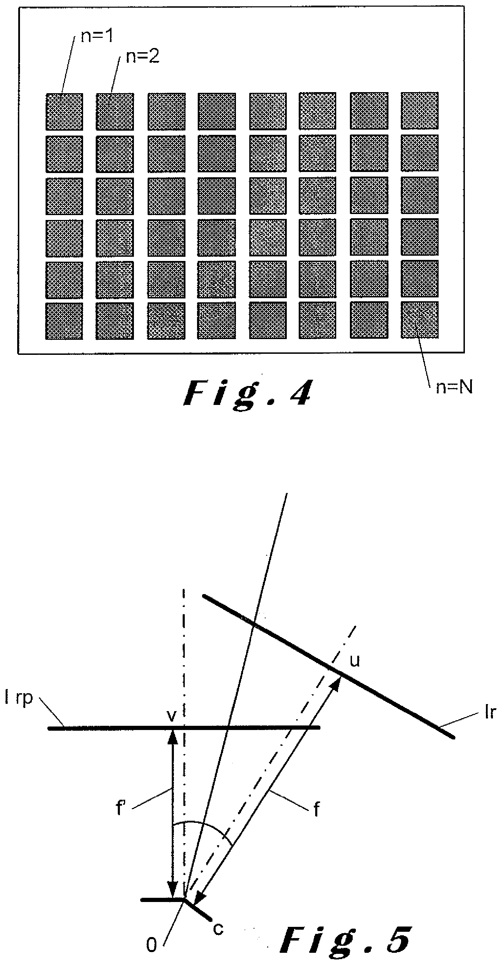

Après le stockage dans la mémoire des paramètres géométriques initiaux, le procédé va prélever (12) l'image suivante (p = p + 1) dans l'ensemble de P images. Cette image suivante est alors segmentée en un nombre de N zones comme illustré à la figure 4. Chaque zone n

($1 \leq n \leq N$) représente une partie distincte de l'image de la surface.

La segmentation en zones d'une image a pour but de permettre dans une étape ultérieure du procédé une sélection parmi ces zones. Après que l'image considérée à été segmentée en N zones, on sélectionne parmi les N zones, soit dans une image précédente p - i (p - i $\geq$ 1; i < p) soit dans l'image p considérée, un sous - ensemble de M (M $\leq$ N) zones. Chacune des M zones possède un élément d'image qui devrait potentiellement reprendre la texture de la surface.

La sélection des zones comporte deux étapes, à savoir la détection de la surface à prendre en considération et la sélection même des zones dans cette surface. La détection de la surface de jeu de la surface est de préférence réalisée à l'aide d'un mécanisme basé sur une sélection par couleurs. En particulier dans une retransmission d'un match de football la couleur verte de la pelouse est une couleur dominante. La sélection peut ainsi se baser sur la couleur verte et les pixels qui ne comportent pas un composant couleur vert seront alors rejetés comme étant inutilisables pour la détermination des paramètres géométriques. La sélection est réalisée en sélectionnant dans la surface considérée une texture de nature essentiellement aléatoire et qui reste essentiellement inchangée pendant l'enregistrement de l'ensemble des images. De telles textures sont par exemple formées par du gazon, de la terre battue, de la brique pliée, de la glace ou du parquet.

Le cas échéant il est également possible d'appliquer un opérateur de dilatation aux zones marquées comme étant inutilisables. Ceci permet alors de masquer des zones résiduelles, comme par exemple celles où se trouve dans l'image le public.

Dans le cas d'un jeu sur gazon, une sélection approximative peut être réalisée en marquant comme inutilisables tous les pixels dont la composante rouge est nettement marquée, une telle composante étant toujours présente dans la représentation des personnages (joueurs ou public), et rarement présente dans la surface. Une opération de dilatation appropriée permettra d'éliminer tous les pixels faisant partie de ces personnages.

Une sélection plus précise peut être obtenue à l'aide d'une méthode à deux étapes : une première étape approximative, avec un grand facteur de dilatation permet d'isoler des pixels appartenant à la surface de jeu. Les couleurs de ces pixels sont utilisées pour construire une table de couleurs faisant partie de la surface de jeu. Cette table est alors utilisée pour effecteur une seconde étape de sélection plus précise.

Il faut noter qu'il n'est pas essentiel de conserver tous les pixels faisant partie de la surface de jeu. L'important est d'en conserver suffisamment pour pouvoir procéder avec l'étape suivante (par exemple, disposer d'une surface permettant de sélectionner au moins trois ou quatre zones selon la méthode présentée ci-dessous).

La procédure de sélection des M zones peut s'effectuer sur l'ensemble des pixels de l'image faisant partie de la surface de jeu. Toutefois, il reste préférable de segmenter l'image en N zones, afin de minimiser l'impact des distorsions des lentilles utilisées dans la caméra. En segmentant l'image en zones il est possible de ne considérer que ces zones contenant un maximum de pixels faisant partie de la surface de jeu. Ayant segmenté l'image en zones, comme par exemple illustré à la figure 4, il devient possible de sélectionner que M de ces N zones pour ainsi réduire le temps de traitement, puisque le traitement ne se fera que sur cette partie de l'image qui contient de l'information pertinente pour réaliser le traitement.

Un exemple non limitatif de mécanisme de sélection applicable dans le cas d'une implémentation en temps réel est le suivant :

- Présélectionner un ensemble de M zones dont la position est fixe. La taille des zones sera maximisée en considérant les distorsions de lentilles attendues. Il est préférable que les distorsions de lentilles restent négligeables (inférieures au pixel).
- L'exemple de la figure 4 montre une façon de prédéterminer ces zones dans le cas d'un flux vidéo SD (Simple Définition). Par exemple les zones de 60 pixels par 60 pixels sont réparties dans l'image en privilégiant le bas de celle-ci. On privilégie le bas de l'image car la surface à prendre en considération y sera beaucoup plus fréquemment présent et la texture de la surface y est plus visible ;
- Sélectionner les zones successivement en recherchant celles ne comportant pas de pixels inutilisables ou dont le nombre de pixels utilisables est en dessus d'un seuil (par exemple, un millier de pixels), en maximisant la distance entre la zone sélectionnée et le centre de gravité des zones déjà sélectionnées. Ainsi par exemple on va considérer dans un match de football les zones qui comportent du gazon car celles là font partie de la surface de jeu. Plus le nombre de zones sera grand, plus le processus sera précis.
- La sélection des M zones dans l'image peut également être réalisée en choisissant ces zones qui possèdent un élément d'image en commun. La sélection est alors réalisée sur base du contenu de l'image et du degré de distribution de cet élément dans l'image. Les zones qui possèdent un élément d'image en commun sont sélectionnées sur base de leur contenu. Les zones qui possèdent un élément d'image en commun sont également sélectionnées sur base du degré de distribution de cet élément dans l'image.

La sélection des M zones peut également être réalisée sur base d'une détection de vecteurs de mouvement différentiel dans l'image considérée. L'usage de vecteurs de mouvement est connu en soi et utilisée dans par exemple la compression d'images. Dans cette forme de réalisation on sélectionnera les zones sur base des vecteurs de mouvement. Uniquement ces zones où les vecteurs de mouvement sont considérés comme concordantes sur l'ensemble de l'image, par exemple moins de 5 % de changement, seront sélectionnés. Une telle technique permet également d'appliquer le procédé sur des images strictement monochromes.

Les ombres portées qui font parfois partie du contenu de l'image, en particulier les ombres des joueurs, peuvent perturber le procédé de détermination des paramètres géométriques, car il s'agit d'éléments de texture variables et mobiles, d'autant qu'ils seront difficiles à détecter par sélection de couleurs. Pour réduire l'impact de ces ombres des filtres mettant en évidence les grands changements de dynamique peuvent être utilisés. Il est également possible de mesurer la dynamique de l'image dans les zones où de telles ombres se produisent. Le but est de marquer les pixels qui correspondent à de grands changements dynamiques comme ne faisant pas partie de la représentation de la surface. Alternativement on peut ne pas sélectionner des zones qui comportent de tels changements dynamiques. On sélectionne les zones par une analyse de la distribution des valeurs de pixels dans l'image p ou l'image p-i de façon à rejeter soit des zones dont la distribution des valeurs de pixels est significativement différente de la distribution moyenne observée dans les zones sélectionnées, soit des zones pour lesquelles la variance de la distribution des valeurs de pixels serait étalée au-delà d'un seuil prédéterminé, soit les deux.

Après qu'un sous-ensemble de M (M ≤ N) zones qui possèdent chacune un élément d'image qui reprend la texture a été sélectionné on forme (étape 15) chaque fois un couple entre une image précédente p - i et l'image actuelle p. Après la formation du couple (p - i, p) d'images une série de S (1 ≤ s ≤ S) projections géométriques desdites M zones sélectionnées est réalisée (16) entre les images p - i et p du couple. Sur base de chaque projection (s) on détermine (17) un taux de coïncidence (TC) entre les zones projetées. La série de S projections est par exemple déterminée par un procédé itératif de recherche de minimum du taux de coïncidence. Ainsi on débute par un taux d'échantillonnage vers ces zones où l'on obtient un minimum ou un maximum du taux de coïncidence.

On recherche ensuite parmi les S projections géométriques celle qui fournit le taux de coïncidence le plus élevé entre les zones d'images p - i et p. Pour cela l'on prend chaque taux de coïncidence TCs de chaque projection s (18, 19). On vérifie (20) si le taux TCs est plus élevé que le taux stocké (TM) est si c'est le cas le taux TCs est stocké (21) au lieu du taux TM. Si le taux TCs est inférieur au taux TM, l'on prend la prochaine projection et cela jusqu'à ce que chaque projection a été considérée (22; s = S).

Pour réaliser cette projection il est préférable de travailler sur des images monochromes car cela réduit le temps de traitement et permet ainsi un traitement en temps réel.

L'image monochrome est dérivée de l'image en couleur par la combinaison des canaux de couleur produisant le plus grand contraste dans la texture de la surface. Si l'image est représentée en composantes rouge-vert-bleu (RGB), on peut travailler efficacement sur le canal vert. On peut également travailler sur un canal de luminance. En pratique, tout canal ou toute combinaison maintenant un bon contraste dans la texture de la surface peut être utilisé.

On notera également que cette combinaison peut être adaptée au cours du temps de façon à maximiser la dynamique de la texture de la surface en fonction des conditions d'éclairage. L'image monochrome obtenue peut être filtrée avant le passage à l'étape suivante. Les filtrages peuvent avoir plusieurs objectifs :

- Pour réduire la puissance de calcul nécessaire, on appliquera un filtre passe-bas sur l'image, de façon à pouvoir appliquer un sous-échantillonnage à ces images lors de l'étape de sélection des zones ;
- Un filtre passe-bande ou un filtre dérivateur dans l'espace de l'image peut être appliqué pour éliminer des structures visuelles telles que les ombres de grande taille ou les "lignes de tontes" présentes dans la texture du gazon ou de la surface, ou encore pour réduire les composantes de bruit présentes dans l'image.

L'élimination des lignes de tontes et des ombres est destinée à éviter des confusions lors de l'étape suivante, qui pourraient survenir suite à la comparaison de zones différentes, contenant un "dessin" marqué similaire.

La matrice suivante définit un exemple non limitatif de noyau de filtrage approprié.

$$
\begin{pmatrix}
0 & 0 & 0 & -1 & -1 & -1 & 0 & 0 & 0 \\
0 & -1 & 0 & 0 & 0 & 0 & 0 & -1 & 0 \\
0 & 0 & 0 & 0 & 0 & 0 & 0 & 0 & 0 \\
-1 & 0 & 0 & 2 & 2 & 2 & 0 & 0 & -1 \\
-1 & 0 & 0 & 2 & 0 & 2 & 0 & 0 & -1 \\
-1 & 0 & 0 & 2 & 2 & 2 & 0 & 0 & -1 \\
0 & 0 & 0 & 0 & 0 & 0 & 0 & 0 & 0 \\
0 & -1 & 0 & 0 & 0 & 0 & 0 & -1 & 0 \\
0 & 0 & 0 & -1 & -1 & -1 & 0 & 0 & 0
\end{pmatrix}
$$

Pour former lesdits couples d'images (p - i, p) on utilise les éléments d'images exprimés en leur valeur d'intensité. A partir de ces éléments d'images on calcule des coordonnées de projection s de l'image p - i dans l'image p. Pour déterminer un taux de coïncidence on utilise les valeurs successives de chacun des couples d'éléments d'images pour calculer une valeur de corrélation, soit :

$$C = \frac{\sum_{i=0}^{n}(L_i R_i) - \sum_{i=0}^{n} L_i \sum_{i=0}^{n} R_i}{\sqrt{(\sum_{i=0}^{n} L_i^2 - (\sum_{i=0}^{n} L_i^2))(\sum_{i=0}^{n} R_i^2 - (\sum_{i=0}^{n} R_i^2))}}$$

Si n représente le nombre d'éléments d'image en correspondance dans la zone, $L_i$ la luminance de l'élément de l'image p mis en correspondance via la projection avec l'élément de l'image p - i dont la luminance est $R_i$.

A partir des valeurs de corrélation il est possible de déterminer un taux de coïncidence en éliminant d'abord les projections dont la valeur de corrélation est inférieure à un seuil prédéterminé. Ensuite on calcule la moyenne de la valeur de corrélation des zones restantes pour autant que le nombre des zones restantes sont supérieures à un seuil prédéterminé.

La méthode selon l'invention recherchera le jeu de paramètres qui maximise (ou tend à maximiser) la valeur du taux de coïncidence sur chaque zone tout en maximisant le nombre de zones proposant une valeur de corrélation élevée. Ceci est par exemple réalisé en comparant les taux de coïncidence entre eux et en déterminant ainsi la projection ayant fourni le taux de coïncidence le plus élevé.

Les corrélations obtenues sont pertinentes dans la mesure où les zones comparées font partie de la surface de jeu, car la texture de cette surface ne change pas significativement dans le temps, alors qu'elle peut être considérée comme aléatoire dans l'espace.

Pour cela il peut être nécessaire de dériver une mesure de satisfaction du jeu des valeurs de corrélations. Une méthode simple mais non limitative consiste à, pour chaque jeu de paramètres candidats :

- Déterminer un seuil de corrélation à partir duquel une zone est considérée pour la distance (par exemple, une petite valeur positive de 0,1 à 0,2). Modifier le seuil de comparaison modifie les caractéristiques de précision et de robustesse du procédé ;
- Rejeter les zones pour lesquelles ce seuil n'est pas atteint ;
- Rejeter les solutions pour lesquelles un nombre suffisant de zones en corrélation n'est pas atteint.

Puis sélectionner le jeu de paramètres candidats qui maximisent le niveau de corrélation moyen pour les zones sélectionnées, en le pondérant sur base du nombre de zones.
On notera enfin les points suivants :

- Qu'il n'est pas forcément nécessaire de calculer les corrélations sur tous les pixels valides d'une zone, ceux-ci pouvant être sous-échantillonnés ;
- La détermination des pixels appartenant à la surface de jeu peut également se faire sur l'image courante. Dans ce cas, on ne tiendra pas compte des paires de pixels correspondant à des zones rejetées ;
- Une interpolation peut être utilisée car il se peut que les coordonnées de la projection d'un élément de l'image p - i dans l'image p ne correspondent pas entièrement aux coordonnées exactes dans l'image p ;
- Si les zones sélectionnées sont suffisamment petites, il est possible d'approximer la fonction de projection pour chaque élément de la zone par une fonction déduite par interpolation de la projection obtenue pour un nombre restreint de points, par exemple si la zone est carré, les points d'angle de ces zones.

La projection géométrique desdites M zones sélectionnées sera maintenant décrite plus en détails à l'aide de la figure 5. Dans cette figure le point 0 représente le centre optique de la caméra, la ligne $l_r$ l'image p - i d'origine et la ligne $l_{rp}$ l'image p - i ré-projetée qui se trouve à la distance focale f' équivalente de la ré-projection. L'image d'origine se trouve à une distorsion focale f du centre optique. Dans un but de simplification les distances des lentilles et le décentrage des objectifs ne seront pas pris en considération.

La projection d'un point U de l'image p - i(plan lr) sur l'image p (point V du plan lrp) est en réalité une projection perspective. Si on considère que la distance entre les éléments d'image est la même dans les deux projections, que cette distance est la même selon l'axe x et l'axe y, et que les centres optiques sont les origines des systèmes de référence, la formule de la transformation est

$$P = T_r\, R_{\Phi 2}\, R_{\Theta}\, R_{\Phi 1}\, C$$

où C est la matrice de projection conique associé à l'image p, les matrices R représentent trois rotations et Tr est une matrice de translation permettant de transférer le référentiel du centre de l'image de départ ("image caméra lr") vers le point de rotation O (position effective de la caméra).

Nous considérons ici que le passage d'une position à l'autre s'effectue en modifiant l'angle d'élévation avant et après la rotation en azimut, ce qui correspond à la mécanique d'un pied de caméra. C'est pourquoi il y a trois rotations.
Les matrices de rotation s'expriment sous la forme suivante, si $\Theta$ est l'angle d'azimut de la cible par rapport à l'image d'origine, $\Phi 1$ l'angle d'élévation de la position cible et $\Phi 2$ l'angle d'élévation d'origine.

$$R_\theta = \begin{pmatrix} \cos\Theta & 0 & -\sin\Theta & 0 \\ 0 & 1 & 0 & 0 \\ \sin\Theta & 0 & \cos\Theta & 0 \\ 0 & 0 & 0 & 1 \end{pmatrix}$$

$$R_{\varphi 1} = \begin{pmatrix} 1 & 0 & 0 & 0 \\ 0 & \cos\varphi_1 & \sin\varphi_1 & 0 \\ 0 & -\sin\varphi_1 & \cos\varphi_1 & 0 \\ 0 & 0 & 0 & 1 \end{pmatrix}$$

$$R_{\varphi 2} = \begin{pmatrix} 1 & 0 & 0 & 0 \\ 0 & \cos\varphi_2 & -\sin\varphi_2 & 0 \\ 0 & \sin\varphi_2 & \cos\varphi_2 & 0 \\ 0 & 0 & 0 & 1 \end{pmatrix}$$

La matrice de projection conique C s'exprime sous la forme

$$C = \begin{pmatrix} 1 & 0 & 0 & 0 \\ 0 & 1 & 0 & 0 \\ 0 & 0 & 0 & \dfrac{1}{f'} \\ 0 & 0 & 0 & 0 \end{pmatrix}$$

Où f' représente la distance focale de la caméra pour l'image dans laquelle on effectue la projection finale. La matrice Tr s'exprime :

$$Tr = \begin{pmatrix} 1 & 0 & 0 & 0 \\ 0 & 1 & 0 & 0 \\ 0 & 0 & 1 & 0 \\ 0 & 0 & -f & 1 \end{pmatrix}$$

où f représente la distance focale de la caméra à partir de laquelle la projection est effectuée.

Après avoir déterminé (étape 21) la projection géométrique qui fournit le taux de coïncidence le plus élevé entre les zones des images p - i et p, il devient possible de déterminer (23) les paramètres géométriques de l'image p considérée à partir des paramètres géométriques de l'image p - i et de la projection géométrique utilisée qui a mené au taux de coïncidence le plus élevé. Sur base des éléments d'images de la zone m ainsi sélectionnée et des paramètres géométriques de l'image p - i, on déterminera les paramètres géométriques de l'image p en utilisant ceux de l'image p - i pour la zone m et en les adaptant ainsi pour former ceux de la zone m de l'image p qui deviendront ainsi les paramètres géométriques de l'image p.

Ajouter les angles de rotation de la projection sélectionnée à ceux de p-i et reprenant la distance focale correspondante à cette projection.

De préférence les paramètres géométriques sont exprimés en termes d'une matrice de projection conique en coordonnées homogènes. Ceci facilite le calcul des paramètres géométriques.

La présence de segments de ligne de la surface dans l'image peut également perturber le processus en provoquant des confusions entre des zones différentes comportant des dessins similaires. Il faut remarquer qu'en cas de présence de lignes, les valeurs de corrélation obtenues ne dépendront quasiment que de ces lignes et non de la texture de la surface. Or c'est la texture de la surface qui rend le calcul en corrélation pertinent. Ce phénomène est tout à fait similaire à celui rencontré avec les lignes de tontes et les grandes ombres portées.

On peut complémenter le mécanisme de détection de la surface de jeu en marquant les pixels appartenant à ces lignes comme ne faisant pas partie de la représentation de cette surface. On évitera ainsi la sélection de zones comportant de tels pixels ou on minimisera cette situation dans les zones effectivement sélectionnées.

Le marquage des pixels appartenant aux lignes peut se faire :

- A l'aide d'un processus détecteur de lignes ;
- Par sélection de couleur, par exemple en tenant compte du paramètre de saturation de couleur ;
- En projetant la représentation des lignes connues en terme de géométries dans l'image, en se servant des paramètres déterminés par le procédé.

Dans tous les cas, des opérations de dilatation des zones marquées peuvent être nécessaires pour palier aux imprécisions.

La nature différentielle du procédé le rend sensible aux problèmes d'accumulation d'erreurs. Il en découle une dérive préjudiciable à son utilisation sur de longues ensembles.

Le procédé peut être amélioré en comparant l'image capturée à l'instant $T_i$ avec une image capturée et traitée précédemment ("référence distante"), cette image étant utilisée tant qu'elle conserve une portion commune suffisante avec l'image courante, par exemple 50 % en commun. Lorsque la mise en correspondance de l'image de référence distante s'avère impossible, cette image de référence est remplacée par la dernière image pour laquelle le procédé a permis de déterminer les paramètres géométriques. On parvient ainsi à minimiser les problèmes d'accumulation d'erreurs. Comme pour le procédé de base, la sélection des zones peut se faire aussi bien sur l'image courante que sur l'image de référence distante. La sélection peut aussi s'opérer simultanément sur les deux images de façon à maximiser le nombre de zones utiles et la surface utile dans celles-ci, en tenant compte d'une première approximation du résultat (par exemple par prédiction à partir du résultat obtenu pour l'image précédente). On peut également se servir de la sélection réalisée sur l'image précédente.

L'écart entre une référence distante et l'image courante est généralement bien plus grande que l'écart présent avec l'image de référence à court terme. Cela implique des gammes de recherche plus grandes. Il est possible d'effectuer une première recherche à l'aide de la référence à court terme, puis d'effectuer une recherche de raffinement sur base de la référence distante, autour de la solution obtenue durant la première étape.

Lors de l'utilisation d'une référence distante, du fait des écarts entre cette image distante et cette image courante, il se peut qu'une grande partie de cette image distante ne puisse pas être mise en correspondance par projection avec l'image courante. Partant du principe que l'image courante p est fort proche de l'image p - i court terme, la sélection des zones sur l'image p - i à long terme peut être modifiée pour que ne soient utilisées que des zones se projetant à l'intérieur de l'image p - i à court terme. Dans le cas ou ce choix vient impossible, on pourra remplacer cette référence distante par la dernière image pour laquelle la procédure de recherche a réussi.

Afin de minimiser les recherches, il est possible de centrer la gamme des paramètres de recherche autour de valeurs prédites sur base des valeurs précédentes. Cette prédiction peut se faire par exemple sur base d'une régression linéaire. Cette prédiction permet également de disposer d'un jeu de paramètres alternatif en cas d'échec des procédures de recherche.

Partant de l'hypothèse que les différences de paramètres géométriques entre l'image p - i à court terme et l'image courante p sont faibles, il est possible de trouver une forte corrélation entre les zones de l'image p - i et leur projection dans l'image courante p par simple translation. Dès lors, il est possible de faire précéder l'étape de recherche décrite ci-dessus par une étape préliminaire, dans laquelle chaque zone est traitée indépendamment, et analysée en corrélation avec une zone proche obtenue par translation. Si une corrélation forte est obtenue pour une zone, le processus de recherche pourra être guidé et donc accéléré efficacement en appliquant un critère de correspondance entre le centre des zones des deux images.

Le point d'entrée du processus est une première image pour laquelle les paramètres de caméra sont connus. Le procédé conduisant à ce résultat ne fait pas partie de l'invention. Néanmoins, le procédé choisi pourrait être appliqué à d'autres images du flux vidéo. Dans ce cas, il est possible de corriger le résultat du procédé faisant partie de l'invention. L'application progressive de ces corrections peut-être nécessaire lorsque le résultat du processus est utilisé pour l'incrustation d'éléments dans l'image.

Les résultats du processus de recherche sont généralement entachés d'un bruit. Ce bruit est la résultante de plusieurs sources dont :

- L'utilisation de zones de comparaison différentes lors du traitement d'images successives, qui peuvent conduire à des résultats différents du fait d'éléments perturbateurs ou de l'imprécision du modèle de la caméra (par exemple, les distorsions d'objectif) ;
- Les distorsions induites par la caméra en cas de mouvements rapides (durée de l'intégration du capteur, fonctionnement de l'obturateur, effets de balayage, etc.) ;
- Des éléments variables dans l'image tels que de la fumée, des ombres mobiles (nuages); des objets mobiles imprévus (par exemple des papiers lancés par les spectateurs), etc ;
- Le bruit thermique présent dans les images, qui ne sera pas totalement rejeté par le processus.

Ces sources vont conduire à de petites erreurs, le plus souvent aléatoires, dans le résultat obtenu pour chaque trame vidéo. Ce bruit correspond souvent à une erreur de projection inférieure à la taille du pixel, mais de telles erreurs sont visibles.

Un filtre appliqué sur l'ensemble de paramètres de caméra obtenue par le procédé peut être appliqué, en considérant l'ensemble de chaque paramètre comme un signal échantillonné.

Appliquer un simple filtre linéaire éliminera des composantes introduisant des tremblements dans les éléments insérés dans l'image. Cependant, un filtrage linéaire uniforme entrainera des effets de glissement de ces insertions lors de changements de mouvement brusque de la caméra.

L'application d'un filtre adaptatif, contrôlé à partir des dérivées successives des signaux à filtrer permet d'éviter ce problème. L'objectif est alors de détecter les changements brusques de direction et d'éviter l'application du filtre autour de ces changements.

Lors d'une grande accélération ou décélération de la caméra on ré- initialisera la référence à long terme et on commence à partir de la ré- initialisation.

## Revendications

1. Procédé de détermination des paramètres géométriques indiquant le mouvement d'une caméra (2) dont le centre optique reste immobile ou se déplace selon une trajectoire connue, laquelle caméra (2) enregistre un ensemble comprenant P images vidéo d'une action qui se déroule sur au moins un segment d'une surface, ledit procédé étant destiné à permettre l'incrustation d'éléments graphiques dans les images vidéo, **caractérisé en ce que** le procédé comporte le stockage dans une mémoire des paramètres géométriques initiaux (11) déterminés pour une image initiale (p=1 ; (1≤p≤P)) faisant partie de l'ensemble de P images enregistrées par la caméra (2), et suivant lequel chaque image p est chaque fois au moins partiellement segmentée (13) en un nombre N de zones, et **en ce que** pour chacune des images dudit ensemble on sélectionne (14), soit dans une image précédente p-i (p-i≥1 ; i<p) soit dans l'image p considérée, un sous-ensemble de M (M≤N) desdites zones dont chacune des M zones possède un élément d'image qui reprend dans la surface une texture de nature essentiellement aléatoire et qui reste essentiellement inchangée pendant l'enregistrement de l'ensemble d'images, et **en ce que** l'on forme (15) chaque fois un couple entre l'image p-i et l'image p pour réaliser ensuite une série de S (1≤s≤S) projections géométriques desdites M zones sélectionnées (16) entre les images dudit couple et déterminer (17-22) pour chaque projection (s) un taux de coïncidence entre les zones projetées, et **en ce que** l'on recherche parmi les S projections géométriques celle qui fournit le taux de coïncidence le plus élevé entre les zones des images p-i et p, et **en ce que** l'on détermine les paramètres géométriques de l'image p (23) considérée à partir des paramètres géométriques de l'image p-i et de la projection géométrique utilisée qui a mené au taux de coïncidence le plus élevé, ladite incrustation étant réalisée selon la perspective de la caméra (2) dans le flux de l'ensemble d'images.

**2.** Procédé suivant la revendication 1, **caractérisé en ce que** pour déterminer (17-22) le taux de coïncidence de chacune des projections géométriques on recherche un maximum de corrélation entre les zones projetées d'une même projection.

**3.** Procédé suivant l'une des revendications 1 ou 2, **caractérisé en ce que** chaque image p de l'ensemble de P images est enregistrée en couleur par la caméra (2) et transformée en image monochrome avant de déterminer (17-22) le taux de coïncidence.

**4.** Procédé suivant l'une des revendications 1 à 3, **caractérisé en ce que** ledit couple d'images est ensuite filtré à l'aide d'un filtre spatial.

**5.** Procédé suivant l'une des revendications 1 à 4, **caractérisé en ce que** le procédé est appliqué à des images vidéo concernant un jeu qui est joué sur ladite surface, en particulier un jeu de football (1), rugby ou de tennis, ladite sélection (14) des M zones étant réalisée par une détection du segment de jeu de la surface qui constitue la surface de jeu, suivie de ladite répartition en zones dans ledit segment de jeu.

**6.** Procédé suivant la revendication 5, **caractérisé en ce que** ladite détection du segment de jeu est réalisée par une détection de couleur, ou est approximée par une détection du segment de jeu dans une autre image de l'ensemble des images.

**7.** Procédé suivant la revendication 5, **caractérisé en ce qu'**un opérateur de dilatation est appliqué aux zones ne faisant pas partie du segment de jeu.

**8.** Procédé suivant la revendication 6, **caractérisé en ce que** la sélection (14) des zones est réalisée en recherchant dans la texture considérée successivement celles ne comportant pas de pixels inutilisables ou dont le nombre de pixels utilisables est en dessus d'un seuil pré-établi, en maximisant la distance entre la zone sélectionnée et le centre de gravité des zones déjà sélectionnées.

**9.** Procédé suivant l'une des revendications 5 à 8, **caractérisé en ce que** ladite surface comporte des lignes de jeu et **en ce que** les zones comportant de telles lignes de jeu ne font pas partie des M zones sélectionnées.

**10.** Procédé suivant la revendication 9, **caractérisé en ce que** l'on détermine un seuil de corrélation par zone et que l'on rejette ces zones pour lesquelles le seuil de corrélation n'est pas atteint.

**11.** Procédé suivant l'une des revendications 1 à 10, **caractérisé en ce que** ladite série de s projections est déterminée par une prédiction de mouvement continu entre l'image p et l'image p-i.

**12.** Procédé suivant l'une des revendications 1 à 10, **caractérisé en ce que** ladite sélection (14) des zones est réalisée par une analyse de la distribution des valeurs de pixels dans l'image p ou l'image p-i de façon à rejeter soit des zones dont la distribution des valeurs de pixels est significativement différente de la distribution moyenne observée dans les zones sélectionnées, soit des zones pour lesquelles la variance de la distribution des valeurs de pixels serait étalée au-delà d'un seuil prédéterminé, soit les deux.

**13.** Procédé suivant la revendication 12, **caractérisé en ce que** l'on mesure la distribution de niveaux de luminance dans les N zones, et que l'on sélectionne les M zones comme étant celles pour lesquelles la distribution de luminance est concentrée dans une gamme prédéterminée.

**14.** Procédé suivant l'une des revendications 1 à 13, **caractérisé en ce que** la détermination (17-22) du taux de coïncidence entre les zones projetées comporte une sélection préalable de ces projections qui comportent une correspondance entre les zones des images p et p-i.

**15.** Procédé suivant l'une des revendications 1 à 14, **caractérisé en ce que** l'angle de roulis de la caméra (2) reste constant ou évolue suivant une trajectoire prédéterminée.

**16.** Procédé suivant l'une des revendications 1 à 15, **caractérisé en ce qu'**entre l'image p et une image p-j où p-j≥1 et 3≤j<p un autre couple est formé pour réaliser ensuite une série de S' (1≤s'≤S') projections géométriques des M' zones sélectionnées entre les images dudit autre couple et déterminer pour chaque projection s' un autre taux de coïncidence entre les zones projetées, et **en ce que** l'on recherche parmi les S' projections géométriques celle qui fournit un autre taux de coïncidence le plus élevé entre les zones des images p-j et p, et **en ce que** l'on détermine les paramètres géométriques de l'image p considérée à partir des paramètres géométriques de l'image p-i et p-j de la projection géométrique utilisée qui ont mené à l'autre taux de coïncidence le plus élevé.

**17.** Procédé suivant la revendication 16, **caractérisé en ce que** la sélection (14) dudit sous-ensemble de M' zones reste inchangée pour un nombre prédéterminé d'images subséquentes.

**18.** Procédé suivant l'une des revendications 1 à 17, **caractérisé en ce que** la détermination des paramètres géométriques pour une image p (p≠1) est également faite par extrapolation à partir des paramètres déterminés pour des images de l'ensemble.

**19.** Procédé suivant l'une des revendications 1 à 18, **caractérisé en ce que** les projections réalisées pour chaque image p sont corrigées à l'aide d'une fonction de correction établie pour la lentille de la caméra (2) et le décentrage de cette lentille.

**20.** Procédé suivant l'une des revendications 1 à 19, **caractérisé en ce que** l'on utilise la détermination d'un vecteur de mouvement dans l'image pour la détermination du segment dans la surface.

**21.** Procédé suivant l'une des revendications 1 à 20, **caractérisé en ce que** l'on remplace la série de projections par une série de translations linéaires des M zones entre l'image p et l'image p-i.

**22.** Procédé suivant l'une des revendications 1 à 21, **caractérisé en ce que** l'on applique un filtrage adaptatif sur les paramètres géométriques déterminés.

**23.** Procédé suivant l'une des revendications 1 à 22, **caractérisé en ce qu'**un filtrage adaptatif est appliqué sur les paramètres géométriques déterminés, chaque paramètre étant considéré comme un signal échantillonné.

**24.** Procédé suivant l'une des revendications 1 à 23, **caractérisé en ce qu'**à partir des paramètres géométriques déterminés la distorsion des lentilles de la caméra est déterminée.

**25.** Procédé suivant l'une des revendications 1 à 24, **caractérisé en ce que** des lignes de jeu sont détectées et la distance entre les lignes de jeu détectées dans l'image et la projection des lignes de jeu est utilisée pour corriger les paramètres géométriques déterminés.

**Patentansprüche**

**1.** Verfahren zum Bestimmen der geometrischen Parameter, welche die Bewegung einer Kamera (2) angeben, deren optischer Mittelpunkt unbeweglich bleibt oder sich auf einer bekannten Bahn bewegt, wobei die Kamera (2) eine Gruppe aufzeichnet, die P Videobilder einer Aktion umfasst, die sich auf mindestens einem Segment einer Oberfläche abspielt, wobei das Verfahren dazu gedacht ist, die Einblendung von grafischen Elementen in den Videobildern zu erlauben, **dadurch gekennzeichnet, dass** das Verfahren das Speichern in einem Speicher der anfänglichen geometrischen Parameter (11), die für ein anfängliches Bild (p = 1; (1≤p≤P)) bestimmt sind, das zu der Gruppe von P Bildern gehört, die durch die Kamera (2) aufgezeichnet werden, umfasst, und gemäß dem jedes Bild p jedes Mal mindestens teilweise in eine Anzahl N von Zonen segmentiert (13) wird, und dass für jedes der Bilder der Gruppe entweder in einem vorhergehenden Bild p-i (p-i≥1; i<p) oder in dem betreffenden Bild p eine Untergruppe von M (M≤N) der Zonen ausgewählt (14) wird, wobei jede der M Zonen ein Bildelement umfasst, das in der Oberfläche eine Textur im Wesentlichen zufälliger Beschaffenheit, und die während der Aufzeichnung der Bildgruppe im Wesentlichen unverändert bleibt, übernimmt, und dass jedes Mal ein Paar aus dem Bild p-i und dem Bild p gebildet (15) wird, um anschließend eine Reihe von S (1≤s≤S) geometrischen Projektionen der M ausgewählten (16) Zonen zwischen den Bildern des Paars auszubilden und für jede Projektion (s) eine Übereinstimmungsrate zwischen den projizierten Zonen zu bestimmen (17-22), und dass aus den S geometrischen Projektionen diejenige gesucht wird, welche die höchste Übereinstimmungsrate zwischen den Zonen der Bilder p-i und p bereitstellt, und dass die geometrischen Parameter des betreffenden Bildes p (23) aus den geometrischen Parametern des Bildes p-i und der verwendeten geometrischen Projektion, die zu der höchsten Übereinstimmungsrate geführt hat, bestimmt werden, wobei die Einblendung gemäß der Perspektive der Kamera (2) im Strom der Bildgruppe durchgeführt wird.

2. Verfahren nach Anspruch 1, **dadurch gekennzeichnet, dass** zum Bestimmen (17-22) der Übereinstimmungsrate jeder der geometrischen Projektionen ein Korrelationsmaximum zwischen den projizierten Zonen ein und derselben Projektion gesucht wird.

3. Verfahren nach einem der Ansprüche 1 oder 2, **dadurch gekennzeichnet, dass** jedes Bild p der Gruppe von P Bildern durch die Kamera (2) in Farbe aufgezeichnet wird und in ein einfarbiges Bild umgewandelt wird, bevor die Übereinstimmungsrate bestimmt (17-22) wird.

4. Verfahren nach einem der Ansprüche 1 bis 3, **dadurch gekennzeichnet, dass** das Bilderpaar dann anhand eines Raumfilters gefiltert wird.

5. Verfahren nach einem der Ansprüche 1 bis 4, **dadurch gekennzeichnet, dass** das Verfahren auf Videobilder angewendet wird, die ein Spiel betreffen, das auf der Oberfläche gespielt wird, insbesondere ein Fußballspiel (1), ein Rugby-Spiel oder ein Tennisspiel, wobei die Auswahl (14) der M Zonen durch eine Detektion des Spielsegments der Oberfläche, die die Spielfläche bildet, gefolgt von der Aufteilung in Zonen in dem Spielsegment durchgeführt wird.

6. Verfahren nach Anspruch 5, **dadurch gekennzeichnet, dass** die Detektion des Spielsegments durch eine Farbdetektion durchgeführt wird oder durch eine Detektion des Spielsegments in einem anderen Bild der Bildgruppe genähert wird.

7. Verfahren nach Anspruch 5, **dadurch gekennzeichnet, dass** ein Dilatationsoperator auf die Zonen angewendet wird, die nicht zum Spielsegment gehören.

8. Verfahren nach Anspruch 6, **dadurch gekennzeichnet, dass** die Auswahl (14) der Zonen durchgeführt wird, indem in der betreffenden Textur nacheinander diejenigen gesucht werden, die keine nicht verwendbaren Pixel enthalten oder deren Anzahl von verwendbaren Pixeln unter einer voreingestellten Schwelle liegt, indem der Abstand zwischen der ausgewählten Zone und dem Schwerpunkt der bereits ausgewählten Zonen maximiert wird.

9. Verfahren nach einem der Ansprüche 5 bis 8, **dadurch gekennzeichnet, dass** die Oberfläche Spiellinien umfasst und dass die Zonen, die derartige Spiellinien umfassen, nicht zu den ausgewählten M Zonen gehören.

10. Verfahren nach Anspruch 9, **dadurch gekennzeichnet, dass** eine Korrelationsschwelle pro Zone bestimmt wird und dass die Zonen, für welche die Korrelationsschwelle nicht erreicht ist, verworfen werden.

11. Verfahren nach einem der Ansprüche 1 bis 10, **dadurch gekennzeichnet, dass** die Reihe von s Projektionen durch eine Vorhersage einer durchgehenden Bewegung zwischen dem Bild p und dem Bild p-i bestimmt wird.

12. Verfahren nach einem der Ansprüche 1 bis 10, **dadurch gekennzeichnet, dass** die Auswahl (14) der Zonen durch eine Analyse der Verteilung der Pixelwerte in dem Bild p oder dem Bild p-i durchgeführt wird, um entweder Zonen, deren Verteilung der Pixelwerte erheblich anders als die durchschnittliche Verteilung ist, die in den ausgewählten Zonen beobachtet wird, oder Zonen, für welche sich die Varianz der Verteilung der Pixelwerte über eine vorbestimmte Schwelle hinaus verteilt, oder beide zu verwerfen.

13. Verfahren nach Anspruch 12, **dadurch gekennzeichnet, dass** die Verteilung von Luminanzstufen in den N Zonen gemessen wird, und dass die M Zonen als diejenigen ausgewählt werden, für welche die Luminanzverteilung in einer vorbestimmten Palette konzentriert ist.

14. Verfahren nach einem der Ansprüche 1 bis 13, **dadurch gekennzeichnet, dass** die Bestimmung (17-22) der Übereinstimmungsrate zwischen den projizierten Zonen eine Vorauswahl derjenigen Projektionen umfasst, die eine Entsprechung zwischen den Zonen der Bilder p und p-i umfassen.

15. Verfahren nach einem der Ansprüche 1 bis 14, **dadurch gekennzeichnet, dass** der Rollwinkel der Kamera (2) konstant bleibt oder auf einer vorbestimmten Bahn verläuft.

16. Verfahren nach einem der Ansprüche 1 bis 15, **dadurch gekennzeichnet, dass** aus dem Bild p und einem Bild p-j, wobei p-j≥1 und 3≤j<p, ein anderes Paar gebildet wird, um anschließend eine Reihe von S'(1≤s'≤S') geometrischen Projektionen der zwischen den Bildern des anderen Paars ausgewählten M' Zonen auszubilden und für jede Projektion s' eine andere Übereinstimmungsrate zwischen den projizierten Zonen zu bestimmen, und dass aus den S' geometrischen Projektionen diejenige gesucht wird, die eine andere höchste Übereinstimmungsrate zwischen den Zonen der Bilder p-j und p bereitstellt, und dass die geometrischen Parameter des betreffenden Bildes p aus den geometrischen Parametern des Bildes p-i und p-j der verwendeten geometrischen Projektion, die zu der anderen höchsten Übereinstimmungsrate geführt haben, bestimmt werden.

**17.** Verfahren nach Anspruch 16, **dadurch gekennzeichnet, dass** die Auswahl (14) der Teilgruppe von M' Zonen für eine vorbestimmte Anzahl von nachfolgenden Bildern unverändert bleibt.

**18.** Verfahren nach einem der Ansprüche 1 bis 17, **dadurch gekennzeichnet, dass** die Bestimmung der geometrischen Parameter für ein Bild p (p≠1) ebenso durch Extrapolation aus den Parametern, die für Bilder der Gruppe bestimmt werden, erfolgt.

**19.** Verfahren nach einem der Ansprüche 1 bis 18, **dadurch gekennzeichnet, dass** die Projektionen, die für jedes Bild p durchgeführt werden, anhand einer Korrekturfunktion korrigiert werden, die für die Linse der Kamera (2) und die Dezentrierung dieser Linse erstellt wurde.

**20.** Verfahren nach einem der Ansprüche 1 bis 19, **dadurch gekennzeichnet, dass** die Bestimmung eines Bewegungsvektors in dem Bild für die Bestimmung des Segments in der Oberfläche verwendet wird.

**21.** Verfahren nach einem der Ansprüche 1 bis 20, **dadurch gekennzeichnet, dass** die Reihe von Projektionen durch eine Reihe von linearen Translationen der M Zonen zwischen dem Bild p und dem Bild p-i ersetzt wird.

**22.** Verfahren nach einem der Ansprüche 1 bis 21, **dadurch gekennzeichnet, dass** ein adaptives Filtern auf die bestimmten geometrischen Parameter angewendet wird.

**23.** Verfahren nach einem der Ansprüche 1 bis 22, **dadurch gekennzeichnet, dass** ein adaptives Filtern auf die bestimmten geometrischen Parameter angewendet wird, wobei jeder Parameter als ein abgetastetes Signal angesehen wird.

**24.** Verfahren nach einem der Ansprüche 1 bis 23, **dadurch gekennzeichnet, dass** aus den bestimmten geometrischen Parametern die Verzerrung der Linsen der Kamera bestimmt wird.

**25.** Verfahren nach einem der Ansprüche 1 bis 24, **dadurch gekennzeichnet, dass** Spiellinien detektiert werden und der Abstand zwischen den detektierten Spiellinien in dem Bild und der Projektion der Spiellinien verwendet wird, um die bestimmten geometrischen Parameter zu korrigieren.

**Claims**

**1.** Method for determining the geometric parameters indicating the movement of a camera (2), the optical centre of which remains immobile or moves on a known path, said camera (2) recording a set comprising P video images of an action that takes place on at least a segment of a surface, said method being intended to allow the overlaying of graphical elements in the video images, **characterised in that** the method comprises the storage in a memory of the initial geometric parameters (11) determined for an initial image (p=1; (1≤p≤P)) forming part of the set of P images recorded by the camera (2), and according to which each image p is each time at least partially segmented (13) into a number N of zones, and **in that**, for each of the images in said set, a subset of M (M≤N) of said zones, wherein each of the M zones has an image element that repeats in the surface a texture of an essentially random nature and which remains essentially unchanged during the recording of the set of images, is, for each of the images in said set, selected (14), either in a previous image p-i (p-i≥1; i<P) or in the image p in question, and **in that** on each occasion a pair is formed (15) between the image p-i and image p in order then to produce a series of S(1≤s≤S) geometric projections of said M zones selected (16) between the images of said pair and to determine (17-22) for each projection(s) a degree of coincidence between the projected zones, and **in that**, among the S geometric projections, the one is sought that provides the highest level of coincidence between the zones of the images p-i and p, and **in that** the geometric parameters of the image p (23) in question are determined from the geometric parameters of the image p-i and from the geometric projection used that led to the highest degree of coincidence, said overlaying being carried out according to the perspective of the camera (2) in the flow of the set of images.

**2.** Method according to claim 1, **characterised in that**, in order to determine (17-22) the degree of coincidence of each of the geometric projections, a maximum correlation is sought between the projected zones of the same projection.

**3.** Method according to either claim 1 or claim 2, **characterised in that** each image p in the set of P images is recorded in colour by the camera (2) and transformed into a monochrome image before determining (17-22) the degree of coincidence.

**4.** Method according to any of claims 1 to 3, **characterised in that** said pair of images is next filtered by means of a spatial filter.

**5.** Method according to any of claims 1 to 4, **charac-**

**terised in that** the method is applied to video images relating to a game that is played on said surface, in particular a game of football (1), rugby or tennis, said selection (14) of the M zones being made by a detection of the game segment of the surface that constitutes the game surface, followed by said distribution into zones in said game segment.

6. Method according to claim 5, **characterised in that** said detection of the game segment is made by a detection of colour, or is approximated by a detection of the game segment in another image of the set of images.

7. Method according to claim 5, **characterised in that** an expansion operator is applied to the zones that do not form part of the game segment.

8. Method according to claim 6, **characterised in that** the selection (14) of the zones is made by seeking, in the texture considered successively, those not comprising any unusable pixels or wherein the number of usable pixels is above a pre-established threshold, maximising the distance between the selected zone and the centre of gravity of the zones already selected.

9. Method according to any of claims 5 to 8, **characterised in that** said surface comprises game lines and **in that** the zones comprising such game lines do not form part of the M selected zones.

10. Method according to claim 9, **characterised in that** a threshold of correlation by zone is determined and those zones for which the correlation threshold is not achieved are rejected.

11. Method according to any of claims 1 to 10, **characterised in that** said series of s projections is determined by a prediction of continuous movement between the image p and the image p-i.

12. Method according to any of claims 1 to 10, **characterised in that** said selection (14) of zones is made by an analysis of the distribution of the values of pixels in the image p or the image p-i so as to reject either zones where the distribution of the pixel values is significantly different from the mean distribution observed in the selected zones, or zones for which the variance of the distribution of the pixel values would be spread beyond a predetermined threshold, or both.

13. Method according to claim 12, **characterised in that** the distribution of levels of luminance in the N zones is measured, and **in that** the M zones are selected as being those for which the distribution of luminance is concentrated in a predetermined range.

14. Method according to any of claims 1 to 13, **characterised in that** the determination (17-22) of the degree of coincidence between the projected zones comprises a prior selection of these projections that comprise a match between the zones of the images p and p-i.

15. Method according to any of claims 1 to 14, **characterised in that** the angle of roll of the camera (2) remains constant or changes on a predetermined path.

16. Method according to any of claims 1 to 15, **characterised in that**, between the image p and an image p-j where p-j≥1 and 3≤j<p, another pair is formed in order then to produce a series of S' (1≤s'≤S') geometric projections of the M' zones selected between the images of said other pair and to determine, for each projection s', another degree of coincidence between the projected zones, and **in that**, among the S' geometric projections, the one is sought that provides another highest degree of coincidence between the zones of the images p-j and p, and **in that** the geometric parameters of the image p in question are determined from the geometric parameters of the image p-i and p-j of the geometric projection used that led to the other highest degree of coincidence.

17. Method according to claim 16, **characterised in that** the selection (14) of said subset of M' zones remains unchanged for a predetermined number of subsequent images.

18. Method according to any of claims 1 to 17, **characterised in that** the determination of the geometric parameters for an image p (p≠1) is also made by extrapolation from the parameters determined for images in the set.

19. Method according to any of claims 1 to 18, **characterised in that** the projections made for each image p are corrected by means of a correction function established for the lens of the camera (2) and the off-centring of this lens.

20. Method according to any of claims 1 to 19, **characterised in that** the determination of a motion vector in the image is determined for the determination of the segment in the surface.

21. Method according to any of claims 1 to 20, **characterised in that** the series of projections is replaced by a series of linear translations of the M zones between the image p and the image p-i.

22. Method according to any of claims 1 to 21, **characterised in that** an adaptive filtering is applied to the geometric parameters determined.

**23.** Method according to any of claims 1 to 22, **characterised in that** an adaptive filtering is applied to the geometric parameters determined, each parameter being considered to be a sampled signal.

**24.** Method according to any of claims 1 to 23, **characterised in that**, from the geometric parameters determined, the distortion of the lenses of the camera is determined.

**25.** Method according to any of claims 1 to 24, **characterised in that** game lines are detected and the distance between the game lines detected in the image and the projection of the game lines is used for correcting the geometric parameters determined.

Fig. 1

*Fig.2*

*Fig.3*

*Fig.4*

*Fig.5*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HYUNWOO KIM ; KI SANG HONG.** Robust image mosaicing of soccer videos using sel-calibration and line tracking. *Pattern Analysis & Applications,* 27 Mars 2001, vol. 4 (1), 9-19
- **MATTHEW BROWN et al.** Automatic Panoramic Image Stitching using Invariant Features. *INTERNATIONAL JOURNAL OF COMPUTER VISION,* 26 Avril 2007, vol. 74 (1), 59-73
- Fast identification of player position in soccer broadcast video by block-based camera view angle search. **TAKAHIRO MOCHIZUKI et al.** IMAGE AND SIGNAL PROCESSING AND ANALYSIS, 2009. ISPA 2009. PROCEESDINGS OF 6TH INTERNATIONAL SYMPOSIUM ON. IEEE, 16 Septembre 2009, 408-413